# EUROPEAN PATENT APPLICATION

(11) **EP 4 756 365 A1**
(43) Date of publication of application: **10.06.2026**
(21) Application number: 25213544.7
(22) Date of filing: 05.11.2025
(51) Int. Cl.: G01B 11/14, G01B 15/04, G01B 21/16

(54) **APPARATUS AND METHOD FOR MEASURING CLEARANCE**

(30) Priority: 05.12.2024 GB 202417840
(71) Applicant: Rolls-Royce plc, London N1 9FX (GB)
(72) Inventor: Mulloth, Akhil, Derby, DE24 8BJ (GB)
(74) Representative: Rolls-Royce plc

(57) **Abstract**

An apparatus (100) for measuring a clearance (C) between a first component (102) and one or more areas of interest (104) of a second component (106). The apparatus (100) includes an imaging beam source (108) configured to generate an imaging beam (110) that passes between the first component (102) and the second component (106). The apparatus (100) includes a first tube (112) configured to guide the imaging beam (110) from the imaging beam source (108) to the one or more areas of interest (104) of the second component (106). The apparatus (100) includes an imaging beam receiver (114) configured to receive the imaging beam (110). The imaging beam receiver (114) is configured to generate an image (116) in response to receiving the imaging beam (110). The image (116) depicts the clearance (C) between the first component (102) and the one or more areas of interest (104) of the second component (106).

## Description

### FIELD

This disclosure relates to measuring a clearance between two components, and in particular, to an apparatus and a method for measuring a clearance between a first component and one or more areas of interest of a second component.

### BACKGROUND

Gas turbine engines are widely used in various industries, including aerospace, power generation, and industrial applications. In these engines, a clearance between tip of a blade and a turbine casing (or compressor casing) plays a critical role in determining engine efficiency. A high clearance between the tip of the blade and the casing may cause air leakage whereas a low clearance between the tip of the blade and the casing may lead to increased mechanical wear. Therefore, it is desired to maintain an optimal clearance between the tip of the blade and the casing to minimize air leakage, mechanical wear and enhance thermal efficiency.

X-rays have been used to measure blade tip clearance based on differences in imaging beam absorption in these regions, however the conventional method requires high-energy imaging beam to penetrate the thick casing. A high-power x-ray source is needed to produce a high energy imaging beam, which makes the scanning apparatus bulky, heavy, and costly, which is undesirable. The x-ray spot size is larger for high power beams, which reduces the resolution and measurement accuracy.

It is also desirable to reduce material path length of the imaging beam while it passes through the blade tip and the casing in order to measure the clearance between them more accurately.

There is therefore a need for an apparatus and method for measuring clearances that addresses the aforementioned problems or at least provides a useful alternative to known apparatuses and methods for measuring clearances.

### SUMMARY

According to a first aspect, an apparatus for measuring a clearance between a first component and one or more areas of interest of a second component is provided. The apparatus includes an imaging beam source configured to generate an imaging beam that passes between the first component and the second component. The apparatus further includes a first tube disposed between the imaging beam source and the second component. The first tube is configured to guide the imaging beam from the imaging beam source to the one or more areas of interest of the second component. The apparatus further includes an imaging beam receiver configured to receive the imaging beam, such that the first component and the second component are disposed between the imaging beam source and the imaging beam receiver. The imaging beam receiver is configured to generate an image in response to receiving the imaging beam. The image depicts the clearance between the first component and the one or more areas of interest of the second component. The apparatus further includes a second tube disposed between the imaging beam receiver and the second component. The second tube is configured to guide the imaging beam from the second component to the imaging beam receiver.

Inclusion of the first tube and the second tube in the apparatus of the present disclosure creates a defined pathway for the imaging beam which may reduce material path length of the imaging beam. Moreover, the reduction in the material path length of the imaging beam may reduce the power requirement of the imaging beam, thereby improving energy efficiency of the apparatus of the present disclosure. Accordingly, reduced power requirement may enable use of a smaller and less-powered imaging beam source, which reduces overall weight and size of the apparatus. **It** also improves accuracy by reducing the spot size and provides greater contrast to resolve the gap being measured.

The first tube and/or the second tube include a polycapillary lens to guide the imaging beam within the corresponding first tube and/or the second tube. The polycapillary lens may include arrays of small hollow tubes (e.g. glass tubes) that guide the imaging beam (e.g., X-rays) with many total external reflections. Use of the polycapillary lens may enable highly effective focusing of the imaging beam and transmission of the imaging beam.

Each of the first tube and the second tube is made of a high temperature resistant material. High temperature resistant material of the first tube and the second tube may maintain their structural integrity and functionality in high temperature environment, thereby ensuring accurate guidance of the imaging beam at least towards the second component and then towards the imaging beam receiver.

The high temperature resistant material is graphite, silicon carbide, molybdenum disilicide, tungsten, a tungsten alloy, molybdenum, a molybdenum alloy or a high-temperature resistant ceramic or a high-temperature resistant composite.

In some embodiments, the one or more areas of interest of the second component includes a coating of a contrast agent. A material of the contrast agent has a mass attenuation coefficient that is greater than a mass attenuation coefficient of a material of the second component, thereby providing a contrast between the one or more areas of interest of the second component and a rest of the second component.

As the mass attenuation coefficient of the material of the contrast agent is greater than the mass attenuation coefficient of the material of the second component, the one or more areas of interest may be isolated or highlighted with a desirable accuracy. The coating of the contrast agent to the one or more areas of interest of the second component may enable accurate edge detection of the one or more areas of interest of the second component. In other words, due to coating of the contrast agent to the one or more areas of interest of the second component, the one or more areas of interest of the second component may be easily identified and distinguished from the rest of the second component.

In some embodiments, the contrast agent includes platinum or an alloy thereof, or a resin embedded with a plurality of nanoparticles, or a metal nanocomposite.

In some embodiments, the imaging beam source is an electromagnetic source, such as an x-ray source or a gamma-ray source. The imaging beam source is capable of emitting the imaging beam in the electromagnetic spectrum that can penetrate or be transmitted through a material after attenuation.

In some embodiments, the x-ray source is one of a reflective x-ray source or a transmissive x-ray source. The reflective x-ray source uses a thick target (anode) and the electron energy is sufficiently low whereas the transmissive x-ray source uses a thin target (anode) and the electron energy is relatively high.

In some embodiments, the first tube and the second tube are integral with the first component. By integrating the first tube and the second tube into the first component, need for additional mounting or attachment structures for the first tube and the second tube may be eliminated, which may reduce complexity associated with the apparats, thereby leading to simplified assembly. This may enhance durability and robustness of the apparatus of the present disclosure. The first tube and the second tube may pass through more than one component that forms an assembly. It may or may not pass through the final static component (adjacent to the second component) that it is imaging.

In some embodiments, the first tube is a part of the imaging beam source. Integrating the first tube in the imaging beam source may ensure precise alignment of the imaging beam, thereby minimizing risk of misalignment and scattering during the scanning operation.

In some embodiments, the second tube is a part of the imaging beam receiver. Integrating the second tube in the imaging beam receiver may ensure precise alignment of the imaging beam, thereby minimizing risk of misalignment and scattering during the scanning operation.

In some embodiments, each of the first tube and the second tube has a circular cross-section, an elliptical cross-section, a rectangular cross-section, a triangular cross-section, a polygonal cross-section, or a variable cross-section. Use of different cross-sectional shapes for the first tube and the second tube may provide flexibility to adapt the tubes (i.e., the first tube and the second tube) to various applications, thereby enhancing compatibility across a wide range of use cases.

In some embodiments, the second tube is aligned with the first tube, such that the imaging beam generated by the imaging beam source sequentially passes through the first tube, the second component, and the second tube before reaching the imaging beam receiver. The alignment of the second tube with the first tube may ensure that the imaging beam travels through a direct and uninterrupted path from the imaging beam source to the imaging beam receiver, which may minimize scattering and energy loss.

In some embodiments, the first component is a casing of a gas turbine engine, the second component is a blade housed inside the casing, and the one or more areas of interest of the second component includes a tip of the blade, such that the clearance is defined between the tip of the blade and the casing. The casing may be a turbine casing and the blade may be a turbine blade. Alternatively, the casing may be a compressor casing and the blade may be a compressor blade.

The apparatus of the present disclosure may provide an efficient way for measuring a clearance between the tip of the blade and the casing, which is subsequently used for controlling active tip clearance in the gas turbine engine. Such apparatus may provide accurate measurement of the clearance between the casing and the tip of the blade, and such accurate measurement of the clearance is valuable feedback for active tip clearance control mechanism so as to improve fuel efficiency of the gas turbine engine.

In some embodiments, the first tube and the second tube are integral with the casing. By integrating the first tube and the second tube into the casing, need for additional mounting or attachment structures for the tubes may be eliminated, which may reduce complexity associated with the apparats, thereby leading to simplified assembly. Moreover, the integration of the first tube and the second tube with the casing may strengthen a connection between the tubes and the casing, thereby reducing risk of misalignment and detachment during the scanning operation.

In some embodiments, each of the first tube and the second tube is configured to penetrate through a thickness of the casing. Penetration of the first tube and the second tube through the thickness of the casing may allow the imaging beam to directly reach the one or more areas of interest (i.e., the tip) of the blade without requiring the imaging beam to pass through the entire thickness of the casing, thereby reducing attenuation and improving imaging accuracy of the scanning operation. Additionally, the penetration of the first tube and the second tube within the thickness of the casing may reduce the material path length that the imaging beam needs to travel. This may enable the use of low power imaging beam source, thereby reducing overall size and weight of the apparatus.

According to a second aspect, a method of measuring a clearance between a first component and one or more areas of interest of a second component is provided. The method includes applying a contrast agent to the one or more areas of interest of the second component. A material of the contrast agent has a mass attenuation coefficient that is greater than a mass attenuation coefficient of a material of the second component, thereby providing a contrast between the one or more areas of interest of the second component and a rest of the second component. The method also includes providing an imaging beam source, an imaging beam receiver, a first tube, and a second tube. The first tube is disposed between the imaging beam source and the second component. The first component and the second component are disposed between the imaging beam source and the imaging beam receiver. The second tube is disposed between the imaging beam receiver and the second component. The method further includes generating, via the imaging beam source, an imaging beam that passes between the first component and the second component. The method further includes guiding, via the first tube, the imaging beam from the imaging beam source to the one or more areas of interest of the second component. The method further includes guiding, via the second tube, the imaging beam from the second component to the imaging beam receiver. The method further includes receiving the imaging beam at the imaging beam receiver. The method further includes generating, via the imaging beam receiver, an image in response to receiving the imaging beam. The image depicts the clearance between the first component and the one or more areas of interest of the second component. The method further includes measuring the clearance from that image.

By including the first tube and the second tube, the method of the present disclosure allows to create a defined pathway for the imaging beam which may reduce material path length of the imaging beam. With reduction in the material path length of the imaging beam, the method of the present disclosure allows less power requirement of the imaging beam, thereby improving energy efficiency. Accordingly, less power requirement may enable use of a smaller and lighter imaging beam source, which reduces an overall size and weight of a scanning apparatus. Therefore, the method of the present disclosure provides a relatively efficient and improved technique of measuring the clearance between two components.

As the mass attenuation coefficient of the material of the contrast agent is greater than the mass attenuation coefficient of the material of the second component, the one or more areas of interest may be isolated or highlighted with a desirable accuracy. The coating of the contrast agent to the one or more areas of interest of the second component may enable accurate edge detection of the one or more areas of interest of the second component.

In some embodiments, applying the contrast agent to the one or more areas of interest of the second component further includes coating the one or more areas of interest of the second component with the contrast agent by one of direct coating, chemical vapour deposition, physical vapour deposition, electroplating, electroplating and selective etching, and powder coating.

In some embodiments, guiding the imaging beam from the imaging beam source to the one or more areas of interest of the second component further includes guiding the imaging beam, via a polycapillary lens, within the first tube. The polycapillary lens includes arrays of small hollow tubes (e.g. glass tubes) that guide the imaging beam (i.e., X-rays) with many total external reflections. Therefore, guiding of the imaging beam via the polycapillary lens may enable highly effective focusing of the imaging beam and loss-free transmission of the imaging beam.

In some embodiments, guiding the imaging beam from the second component to the imaging beam receiver further includes guiding the imaging beam, via a polycapillary lens, within the second tube.

In some embodiments, generating the imaging beam further includes generating, via the imaging beam source, an x-ray beam or a gamma-ray beam, or any electromagnetic beam that is capable of passing through the second component.

In some embodiments, the method further includes aligning the second tube and the first tube, such that the imaging beam generated by the imaging beam source sequentially passes through the first tube, the second component, and the second tube before reaching the imaging beam receiver. Aligning the second tube with the first tube may allow the imaging beam to travel in an uninterrupted path from the imaging beam source to the imaging beam receiver, thereby reducing the possibility of scattering and energy loss.

In some embodiments, the method further includes penetrating each of the first tube and the second tube through a thickness of the first component. Penetrating the thickness of the first component may allow the imaging beam to directly access the area of interest of the second component without requiring the imaging beam to pass through the entire thickness of the first component, thereby reducing attenuation and improving imaging accuracy. Additionally, penetrating the first tube and the second tube within the thickness of the first component reduces the material path length that the imaging beam needs to travel. This may enable the use of low power imaging beam source, thereby reducing overall size and weight of a scanning apparatus.

According to a third aspect, an apparatus for measuring a clearance between a casing and a tip of a blade of a gas turbine engine is provided. The apparatus includes an imaging beam source configured to generate an imaging beam that passes between the casing and the tip of the blade. The tip of the blade includes a coating of a contrast agent. A material of the contrast agent has a mass attenuation coefficient that is greater than a mass attenuation coefficient of a material of the blade, thereby providing a contrast between the tip of the blade and a rest of the blade. The apparatus further includes a first tube extending from the casing and disposed between the imaging beam source and the blade. The first tube is configured to guide the imaging beam from the imaging beam source to the tip of the blade. The apparatus further includes an imaging beam receiver configured to receive the imaging beam, such that the casing and the blade are disposed between the imaging beam source and the imaging beam receiver. The imaging beam receiver is configured to generate an image in response to receiving the imaging beam. The image depicts the clearance between the casing and the tip of the blade. The method further includes a second tube extending from the casing and disposed between the imaging beam receiver and the blade. The second tube is configured to guide the imaging beam from the blade to the imaging beam receiver.

Inclusion of the first tube and the second tube in the apparatus creates a defined pathway for the imaging beam which may reduce material path length of the imaging beam. Moreover, the reduction in the material path length of the imaging beam may reduce the power requirement of the imaging beam, thereby improving energy efficiency. Accordingly, less power requirement may enable use of a smaller and lighter imaging beam source. Such apparatus may provide accurate measurement of the clearance between the casing and the tip of the blade, and such accurate measurement of the clearance is valuable feedback for active tip clearance control mechanism so as to improve fuel efficiency of the gas turbine engine.

### BRIEF DESCRIPTION OF THE DRAWINGS

Embodiments will now be described by way of example only with reference to the accompanying drawings, in which:
**FIG. 1** shows a schematic sectional side view of a gas turbine engine;
**FIG. 2** is a schematic view of an apparatus for measuring a clearance between a first component and one or more areas of interest of a second component;
**FIG. 3** is a sectional side view of a portion of the gas turbine engine and the apparatus deployed thereon; and
**FIG. 4** is a flowchart for a method of the present disclosure for measuring a clearance between a first component and one or more areas of interest of a second component.

### DETAILED DESCRIPTION

Aspects and embodiments of the present disclosure will now be discussed with reference to the accompanying Figures. Further aspects and embodiments will be apparent to those skilled in the art.

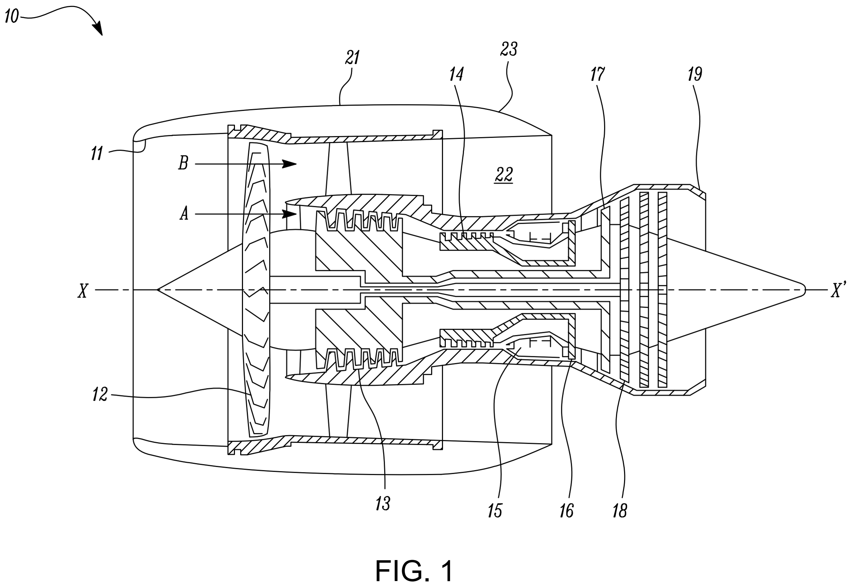

FIG. 1 shows a schematic sectional side view of a gas turbine engine 10 having a principal rotational axis X-X'. The gas turbine engine 10 includes, in axial flow series, an air intake 11, a compressive fan 12 (which may also be referred to as a low-pressure compressor), an intermediate pressure compressor 13, a high-pressure compressor 14, a combustion equipment 15, a high-pressure turbine 16, an intermediate pressure turbine 17, a low-pressure turbine 18, and a core exhaust nozzle 19. A nacelle 21 generally surrounds the gas turbine engine 10 and defines the air intake 11, a bypass duct 22, and a bypass exhaust nozzle 23.

The gas turbine engine 10 works in a conventional manner so that the air entering the air intake 11 is accelerated by the compressive fan 12 to produce two air flows: a first air flow A into the intermediate pressure compressor 13 and a second air flow B which passes through the bypass duct 22 to provide a propulsive thrust. The intermediate pressure compressor 13 compresses the first air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resulting hot combustion products then expand through, and thereby drive the high, intermediate, and low-pressure turbines 16, 17, 18 before being exhausted through the core exhaust nozzle 19 to provide additional propulsive thrust. The high, intermediate, and low-pressure turbines respectively drive the high and intermediate pressure compressors, 14, 13, and the compressive fan 12 by suitable interconnecting shafts.

In some embodiments, the gas turbine engine 10 is used in an aircraft. In some embodiments, the gas turbine engine 10 is an ultra-high bypass ratio engine (UHBPR). In addition, the present invention is equally applicable to aero gas turbine engines, marine gas turbine engines and land-based gas turbine engines.

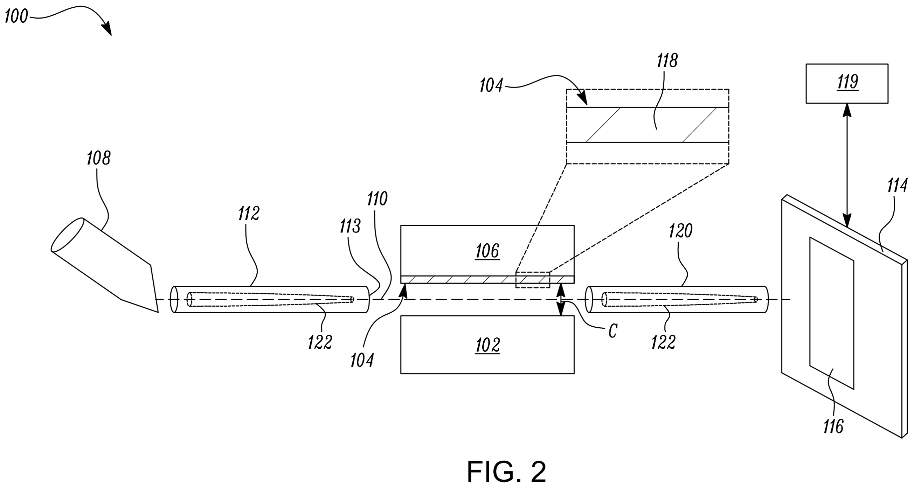

**FIG. 2** is a schematic view of an apparatus 100 for measuring a clearance C between a first component 102 and one or more areas of interest 104 of a second component 106. In some embodiments, the first component 102 and the second component 106 are parts of the gas turbine engine 10 (shown in **FIG. 1**). In other embodiments, the first component 102 and the second component 106 are parts of other prime mover or a machine. In some embodiments, the first component 102 and the second component 106 are metallic. The first component 102 and the second component 106 are shown schematically in **FIG. 2** for the purpose of illustration. Other shapes and designs for the first component 102 and the second component 106 are foreseeable and could be used.

As shown, the apparatus 100 includes an imaging beam source 108 configured to generate an imaging beam 110 that passes between the first component 102 and the second component 106. In some embodiments, the imaging beam source 108 is an electromagnetic source, such as an x-ray source or a gamma-ray source. In some embodiments, the x-ray source is one of a reflective x-ray source or a transmissive x-ray source. In case of the imaging beam source 108 being an x-ray source, the imaging beam 110 is an energy beam within the x-ray region of electromagnetic (EM) spectrum. Alternatively, the imaging beam 110 may be an energy beam within any region in the EM spectrum that can penetrate or be transmitted through a material after attenuation.

The apparatus 100 further includes a first tube 112 disposed between the imaging beam source 108 and the second component 106. The first tube 112 is configured to guide the imaging beam 110 from the imaging beam source 108 to the one or more areas of interest 104 of the second component 106. In some embodiments, the first tube 112 is a part of the imaging beam source 108. In that case, the imaging beam 110 (i.e., x-rays) may be transmitted from the imaging beam source 108 through an end wall 113 of the first tube 112. In other words, the first tube 112 may typically include an electron source (or cathode) for generating electrons, and an x-ray target (or anode) containing x-ray emissive material adapted to emit the x-rays in response to incident electrons that have been accelerated by an accelerating electric field.

Further, the apparatus 100 includes an imaging beam receiver 114 configured to receive the imaging beam 110, such that the first component 102 and the second component 106 are disposed between the imaging beam source 108 and the imaging beam receiver 114. The imaging beam receiver 114 is configured to generate an image 116 in response to receiving the imaging beam 110. The image 116 depicts the clearance C between the first component 102 and the one or more areas of interest 104 of the second component 106.

Additionally, the apparatus 100 may further include a processor 119 configured to be communicably coupled with the imaging beam receiver 114 to receive the generated image 116. Upon receiving the image 116, from the imaging beam receiver 114, the processor 119 is configured to process and analyse the image 116 and extract required information to measure the clearance C between the first component 102 and the one or more areas of interest 104 of the second component 106.

Further, the one or more areas of interest 104 of the second component 106 includes a coating of a contrast agent 118. A material of the contrast agent 118 has a mass attenuation coefficient that is greater than a mass attenuation coefficient of a material of the second component 106, thereby providing a contrast between the one or more areas of interest 104 of the second component 106 and a rest of the second component 106. In some embodiments, in addition to the one or more areas of interest 104 of the second component 106, a portion of interest (not shown) of the first component 102 may also be coated with the contrast agent 118 to improve the contrast between the portion of interest of the first component 102 and a rest of the first component 102.

In some embodiments, the contrast agent 118 may be coated to the one or more areas of interest 104 of the second component 106 by one of direct coating, chemical vapour deposition, physical vapour deposition, electroplating, electroplating and selective etching, and powder coating. In some embodiments, the contrast agent 118 includes platinum or an alloy thereof, or a resin embedded with a plurality of nanoparticles, or a metal nanocomposite.

The apparatus 100 further includes a second tube 120 disposed between the imaging beam receiver 114 and the second component 106. The second tube 120 is configured to guide the imaging beam 110 from the second component 106 to the imaging beam receiver 114. In some embodiments, the second tube 120 is a part of the imaging beam receiver 114. In some embodiments, the second tube 120 is aligned with the first tube 112, such that the imaging beam 110 generated by the imaging beam source 108 sequentially passes through the first tube 112, the second component 106, and the second tube 120 before reaching the imaging beam receiver 114. In some embodiments, the first component 102 may be too thick or opaque to the imaging beam 110 but it may also be possible for the imaging beam 110 to pass through it. The alignment of the second tube 120 with the first tube 112 may ensure that the imaging beam 110 travels through a direct and uninterrupted path from the imaging beam source 108 to the imaging beam receiver 114, which may minimize scattering and energy loss.

Inclusion of the first tube 112 and the second tube 120 in the apparatus 100 creates a defined pathway for the imaging beam 110 which may reduce material path length of the imaging beam 110. Moreover, the reduction in the material path length of the imaging beam 110 may reduce the power requirement of the imaging beam 110, thereby improving energy efficiency of the apparatus 100. Accordingly, reduced power requirement may enable use of a smaller and less-powered imaging beam source 108, which reduces overall weight and size of the apparatus 100.

It should be noted that the apparatus 100 of **FIG. 2** is shown to have both the first tube 112 and the second tube 120. However, in some embodiments, the second tube 120 may be omitted from the apparatus 100. Further, in some embodiments, each of the first tube 112 and the second tube 120 has a circular cross-section, an elliptical cross-section, a rectangular cross-section, a triangular cross-section, a polygonal cross-section, or a variable cross-section. In some embodiments, each of the first tube 112 and the second tube 120 is made of a high temperature resistant material. The high temperature resistant material is graphite, silicon carbide, molybdenum disilicide, tungsten, a tungsten alloy, molybdenum, a molybdenum alloy or a high-temperature resistant ceramic or a high-temperature resistant composite. In some embodiments, the first tube 112 and the second tube 120 are integral with the first component 102. However, in the embodiment illustrated in **FIG. 2****,** the first tube 112 and the second tube 120 are illustrated as separated components from the first component 102.

In some embodiments, the first tube 112 and/or the second tube 120 include a polycapillary lens 122 to guide the imaging beam 110 within the corresponding first tube 112 and/or the second tube 120. The polycapillary lens 122 includes arrays of small hollow tubes (e.g. glass tubes) that guide the imaging beam 110 (i.e., the X-rays) with many total external reflections. In the illustrated embodiment of **FIG. 2****,** both the first tube 112 and the second tube 120 include the polycapillary lens 122 to enable highly effective focusing of the imaging beam 110. However, in some embodiments, only the first tube 112 includes the polycapillary lens 122.

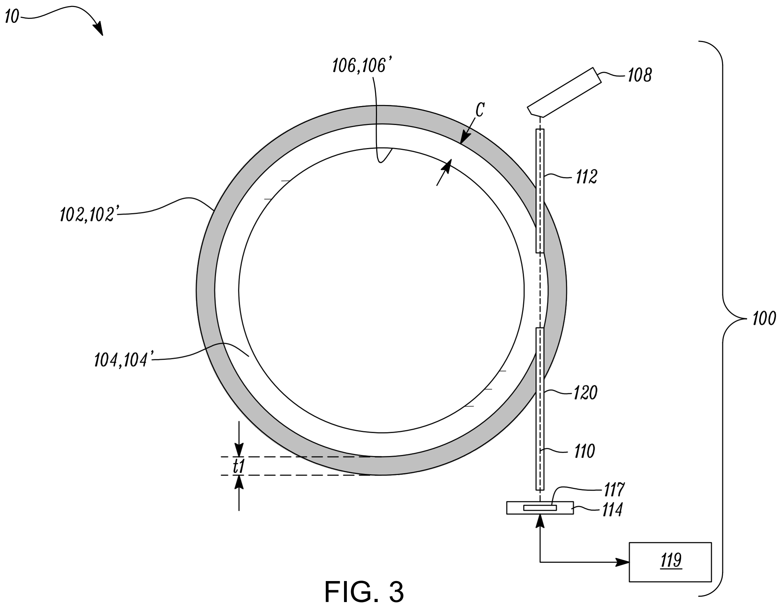

**FIG. 3** is a sectional side view of a portion of the gas turbine engine 10 and the apparatus 100 deployed thereon for measuring the clearance C. In the illustrated embodiment of **FIG. 3****,** the first component 102 is a casing 102' of the gas turbine engine 10, the second component 106 is a blade 106' housed inside the casing 102', and the one or more areas of interest 104 of the second component 106 includes a tip 104' of the blade 106', such that the clearance C is defined between the tip 104' of the blade 106' and the casing 102'. Further, the apparatus 100 is employed for measuring a clearance C between the casing 102' and the tip 104' of the blade 106' of the gas turbine engine 10. In some embodiments, the casing 102' may be a turbine casing and the blade 106' may be a turbine blade. Alternatively, in other embodiments, the casing 102' may be a compressor casing and the blade 106' may be a compressor blade.

As shown, the apparatus 100 includes the imaging beam source 108 configured to generate the imaging beam 110 that passes between the casing and the blade 106'. The tip 104' of the blade 106' includes the coating of the contrast agent (also shown in **FIG. 2**). The material of the contrast agent has a mass attenuation coefficient that is greater than a mass attenuation coefficient of a material of the blade 106', thereby providing a contrast between the tip 104' of the blade 106' and a rest of the blade 106'.

The first tube 112 extends from the casing 102' and is disposed between the imaging beam source 108 and the blade 106'. The first tube 112 is configured to guide the imaging beam 110 from the imaging beam source 108 to the tip 104' of the blade 106'. The imaging beam receiver 114 is configured to receive the imaging beam 110, such that the casing 102' and the blade 106' are disposed between the imaging beam source 108 and the imaging beam receiver 114. The imaging beam receiver 114 is configured to generate an image 117 in response to receiving the imaging beam 110. The image 117 depicts the clearance C between the casing 102' and the tip 104' of the blade 106'.

The second tube 120 extends from the casing 102' and disposed between the imaging beam receiver 114 and the blade 106'. The second tube 120 is configured to guide the imaging beam 110 from the blade 106' to the imaging beam receiver 114. Moreover, the first tube 112 and the second tube 120 are integral with the casing 102'. Specifically, each of the first tube 112 and the second tube 120 is configured to penetrate through a thickness t1 of the casing 102'. Penetration of the first tube 112 and the second tube 120 through the thickness t1 of the casing 102' may allow the imaging beam 110 to directly reach the area of interest 104 (i.e., the tip 104') of the blade 106' without requiring the imaging beam 110 to pass through the entire thickness t1 of the casing 102', thereby reducing attenuation and improving imaging accuracy. Additionally, the penetration of the first tube 112 and the second tube 120 within the thickness t1 of the casing 102' may reduce the material path length the imaging beam 110 need to travel. This may enable the use of low power imaging beam source 108, thereby reducing overall size and weight of the apparatus 100.

The processor 119 is configured to process and analyse the image 117 and extract required information to measure the clearance C between the casing 102' and the tip 104' of the blade 106'. The apparatus 100 may provide accurate measurement of the clearance C between the casing 102' and the tip 104' of the blade 106', and such accurate measurement of the clearance C is valuable feedback for active tip clearance control mechanism so as to improve fuel efficiency of the gas turbine engine 10.

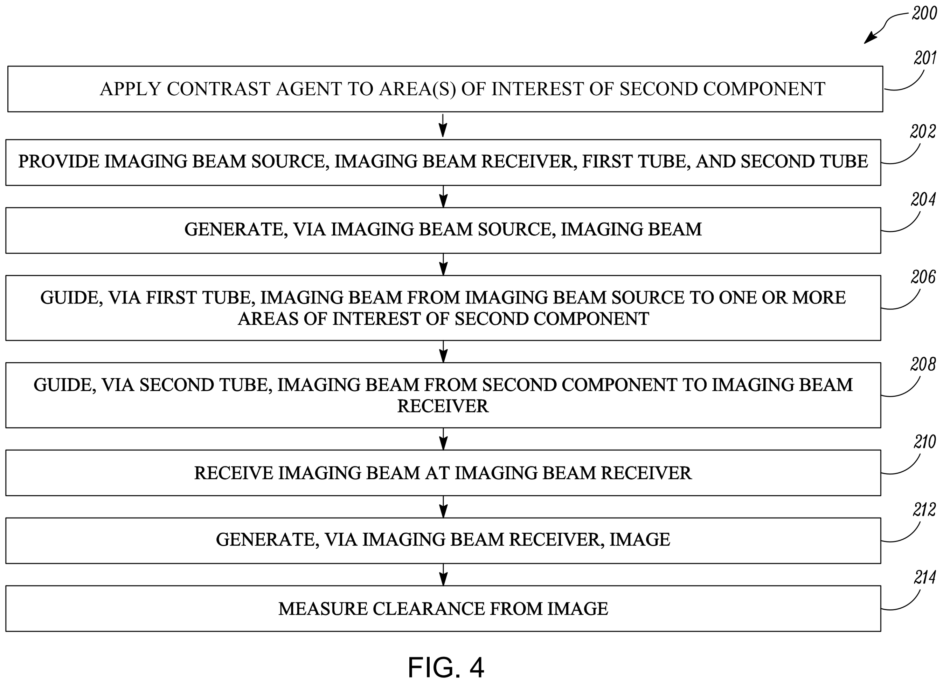

**FIG. 4** is a flowchart for a method 200 of measuring the clearance C between the first component 102 and the one or more areas of interest 104 of the second component 106 shown in **FIG. 2****,** according to an embodiment of the present disclosure. The method 200 may be at least partly performed by the apparatus 100 of **FIG. 2****.** The method 200 may also be used for measuring the clearance C between the casing 102' and the tip 104' of the blade 106' shown in **FIG. 3****.**

Referring to **FIGS. 2** **and** **4****,** At step 201, the method includes applying a contrast agent 118 to the one or more areas of interest 104 of the second component 106, wherein a material of the contrast agent 118 has a mass attenuation coefficient that is greater than a mass attenuation coefficient of a material of the second component 106, thereby providing a contrast between the one or more areas of interest 104 of the second component 106 and a rest of the second component 106.

At step 202, the method 200 includes providing the imaging beam source 108, the imaging beam receiver 114, the first tube 112, and the second tube 120. As mentioned above, the first tube 112 is disposed between the imaging beam source 108 and the second component 106. Further, the first component 102 and the second component 106 are disposed between the imaging beam source 108 and the imaging beam receiver 114. The second tube 120 is disposed between the imaging beam receiver 114 and the second component 106.

In some embodiments, the method 200 further includes applying the contrast agent 118 to the one or more areas of interest 104 of the second component 106. The material of the contrast agent 118 has a mass attenuation coefficient that is greater than a mass attenuation coefficient of the material of the second component 106, thereby providing the contrast between the one or more areas of interest 104 of the second component 106 and the rest of the second component 106. In some embodiments, applying the contrast agent 118 to the one or more areas of interest 104 of the second component 106 further includes coating the one or more areas of interest 104 of the second component 106 with the contrast agent 118 by one of a direct coating, chemical vapour deposition, physical vapour deposition, electroplating, electroplating and selective etching, and powder coating. It should be noted that the contrast agent may be applied to the one or more areas of interest 104 of the second component during manufacturing of the parts (i.e., the second component 106).

At step 204, the method 200 includes generating, via the imaging beam source 108, the imaging beam 110 that passes between the first component 102 and the second component 106. In some embodiments, generating the imaging beam 110 further includes generating, via the imaging beam source 108, an x-ray beam or a gamma-ray beam, or any electromagnetic beam that is capable of passing through the second component 106.

At step 206, the method 200 further includes guiding, via the first tube 112, the imaging beam 110 from the imaging beam source 108 to the one or more areas of interest 104 of the second component 106. In some embodiments, guiding the imaging beam 110 from the imaging beam source 108 to the one or more areas of interest 104 of the second component 106 further includes guiding the imaging beam 110, via the polycapillary lens 122, within the first tube 112. At step 208, the method 200 further includes guiding, via the second tube 120, the imaging beam 110 from the second component 106 to the imaging beam receiver 114. In some embodiments, guiding the imaging beam 110 from the second component 106 to the imaging beam receiver 114 further includes guiding the imaging beam 110, via the polycapillary lens 122, within the second tube 120.

At step 210, the method 200 further includes receiving the imaging beam 110 at the imaging beam receiver 114. At step 212, the method 200 further includes generating, via the imaging beam receiver 114, the image 116 in response to receiving the imaging beam 110. The image 116 depicts the clearance C between the first component 102 and the one or more areas of interest 104 of the second component 106. At step 214, the method 200 further includes measuring the clearance C from that image 116. In some embodiments, the clearance C between the first component 102 and the second component 106 may be measured by the processor 119 communicably coupled with the imaging beam receiver 114 and configured to analyse the image 116.

By including the first tube 112 and the second tube 120, the method 200 allows to create a defined pathway for the imaging beam 110 which may reduce material path length of the imaging beam 110. With reduction in the material path length of the imaging beam 110, the method 200 allows less power requirement of the imaging beam 110, thereby improving energy efficiency. Accordingly, less power requirement may enable use of a smaller and lighter imaging beam source 108, which reduces an overall size and weight of a scanning apparatus 100. Therefore, the method 200 of the present disclosure provides a relatively more efficient and improved technique of measuring the clearance C between two components.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. An apparatus (100) for measuring a clearance (C) between a first component (102) and one or more areas of interest (104) of a second component (106), the apparatus (100) comprising:
an imaging beam source (108) configured to generate an imaging beam (110) that passes between the first component (102)and the second component (106);
a first tube (112) disposed between the imaging beam source (108) and the second component (106), wherein the first tube (112) is configured to guide the imaging beam (110) from the imaging beam source (108) to the one or more areas of interest (104) of the second component (106);
an imaging beam receiver (114) configured to receive the imaging beam (110), such that the first component (102) and the second component (106) are disposed between the imaging beam source (108) and the imaging beam receiver (114), wherein the imaging beam receiver (114) is configured to generate an image (116) in response to receiving the imaging beam (110), the image (116) depicting the clearance (C) between the first component (102) and the one or more areas of interest (104) of the second component (106); and
a second tube (120) disposed between the imaging beam receiver (114) and the second component (106), wherein the second tube (120) is configured to guide the imaging beam (110) from the second component (106) to the imaging beam receiver (114);
wherein one or both of the first tube (112) and the second tube (120) comprise a polycapillary lens (122) to guide the imaging beam (110) within the corresponding first tube (112) and/or the second tube (120); and
each of the first tube (112) and the second tube (120) is made of a high temperature resistant material selected from graphite, silicon carbide, molybdenum disilicide, tungsten, a tungsten alloy, molybdenum, a molybdenum alloy or a high-temperature resistant ceramic or a high-temperature resistant composite.

2. The apparatus of claim 1, wherein the one or more areas of interest (104) of the second component (106) comprises a coating of a contrast agent (118), wherein a material of the contrast agent (118) has a mass attenuation coefficient that is greater than a mass attenuation coefficient of a material of the second component (106), thereby providing a contrast between the one or more areas of interest (104) of the second component (106) and a rest of the second component (106).

3. The apparatus of claim 2, wherein the contrast agent (118) comprises platinum or an alloy thereof, or a resin embedded with a plurality of nanoparticles, or a metal nanocomposite.

4. The apparatus of any preceding claim, wherein the imaging beam source (108) is an electromagnetic source, such as an x-ray source or a gamma-ray source.

5. The apparatus of claim 4, wherein the imaging beam source (108) is an x-ray source that is one of a reflective x-ray source or a transmissive x-ray source.

6. The apparatus of any preceding claim, wherein the first tube (112) and the second tube (120) are integral with the first component (102).

7. The apparatus of any preceding claim, wherein the first tube (112) is a part of the imaging beam source (108).

8. The apparatus of any preceding claim, wherein the second tube (120) is a part of the imaging beam receiver (114).

9. The apparatus of any preceding claim, wherein each of the first tube (112) and the second tube (120) has a circular cross-section, an elliptical cross-section, a rectangular cross-section, a triangular cross-section, a polygonal cross-section, or a variable cross-section.

10. The apparatus of any preceding claim, wherein the second tube (120) is aligned with the first tube (112), such that the imaging beam (110) generated by the imaging beam source (108) sequentially passes through the first tube (112), the second component (106), and the second tube (120) before reaching the imaging beam receiver (114).

11. The apparatus of any preceding claim, wherein:
the first component (102) is a casing (102') of a gas turbine engine (10);
the second component (106) is a blade (106') housed inside the casing (102'); and
the one or more areas of interest (104) of the second component (106) comprises a tip (104') of the blade (106'), such that the clearance (C) is defined between the tip (104') of the blade (106') and the casing (102').

12. The apparatus of claim 11, wherein the first tube (112) and the second tube (120) are integral with the casing (102').

13. The apparatus of claim 11 or 12, wherein each of the first tube (112) and the second tube (120) is configured to penetrate through a thickness (t1) of the casing (102').

14. A method (200) of measuring a clearance (C) between a first component (102) and one or more areas of interest (104) of a second component (106), the method (200) comprising the steps of:
applying a contrast agent (118) to the one or more areas of interest (104) of the second component (106), wherein a material of the contrast agent (118) has a mass attenuation coefficient that is greater than a mass attenuation coefficient of a material of the second component (106), thereby providing a contrast between the one or more areas of interest (104) of the second component (106) and a rest of the second component (106);
providing an imaging beam source (108), an imaging beam receiver (114), a first tube (112), and a second tube (120), wherein the first tube (112) is disposed between the imaging beam source (108) and the second component (106), wherein the first component (102) and the second component (106) are disposed between the imaging beam source (108) and the imaging beam receiver (114), wherein the second tube (120) is disposed between the imaging beam receiver (114) and the second component (106);
generating, via the imaging beam source (108), an imaging beam (110) that passes between the first component (102) and the second component (106);
guiding, via the first tube (112), the imaging beam (110) from the imaging beam source (108) to the one or more areas of interest (104) of the second component (106);
guiding, via the second tube (120), the imaging beam (110) from the second component (106) to the imaging beam receiver (114);
receiving the imaging beam (110) at the imaging beam receiver (114);
generating, via the imaging beam receiver (114), an image (116) in response to receiving the imaging beam (110), the image (116) depicting the clearance (C) between the first component (102) and the one or more areas of interest (104) of the second component (106); and
measuring the clearance (C) from that image (116).

15. The method of claim 14, wherein applying the contrast agent (118) to the one or more areas of interest (104) of the second component (106) further comprises coating the one or more areas of interest (104) of the second component (106) with the contrast agent (118) by one of: direct coating, chemical vapour deposition, physical vapour deposition, electroplating, electroplating and selective etching, and powder coating; and/or guiding the imaging beam (110) from the imaging beam source (108) to the one or more areas of interest (104) of the second component (106) further comprises guiding the imaging beam (110), via a polycapillary lens (122), within the first tube (112).
